# EUROPEAN PATENT SPECIFICATION

(11) **EP 2 146 570 B1**
(45) Date of publication and mention of the grant of the patent: **18.06.2014**
(21) Application number: 08737607.5
(22) Date of filing: 02.05.2008
(51) Int. Cl.: A01N 25/04, A01N 41/10, A01N 35/08, A01P 13/02

(54) **HERBICIDE COMPOSITION**
HERBIZIDZUSAMMENSETZUNG
COMPOSITION HERBICIDE

(30) Priority: 03.05.2007 GB 0708588
(43) Date of publication of application: 27.01.2010
(73) Proprietor: Syngenta Participations AG, 4058 Basel (CH)
(72) Inventor: SOHM, Rupert, Heinrich, 4333 Muenchwilen (CH); SCHNEIDER, Rudolf, 4333 Muenchwilen (CH)
(74) Representative: Syngenta International AG
(86) International application number: PCT/IB2008/001143
(87) International publication number: WO 2008/135854

(56) References cited:
- WO-A-02/19823
- WO-A-02/091831
- WO-A-2006/003371
- WO-A-2007/006415
- WO-A-2007/071761

## Description

The present invention relates to oil dispersions comprising a 2-benzoyl-1,3-cyclohexanedione herbicide.

2-benzoyl-1,3-cyclohexanedione herbicides are well known for their excellent weed controlling properties. Several formulations of 2-benzoyl-1,3-cyclohexanedione herbicides are known and used with good effect.

Agrochemical formulations comprising a solid active ingredient suspended in an oil are well known (see for example WO 02/091831 A and WO 07/006415 A). Such formulations are referred to as oil dispersions (GIFAP code: "OD"). The oil dispersion is a concentrate which is diluted with water before use to produce an aqueous composition which is used in controlling plants or plant growth. Dilution in water results in a suspo-emulsion if the active ingredient is insoluble in water (as is the case with mesotrione); if the active ingredient is soluble in water an emulsion is formed. To facilitate dispersion in water such formulations contain emulsifiers, dispersants and further formulation components such as thickeners, antifoams and solid carriers. Oil dispersions are often chosen if the active ingredient is sensitive to water or if the adjuvancy of the oil is required for good biological performance. Oil dispersions are usually free of water either to prevent degradation of any sensitive active ingredient and/or to prevent the risk of phase separation of the formulation.

We have now discovered that stable oil dispersions of a 2-benzoyl-1,3-cyclohexanedione herbicide can be obtained by the addition of water and optionally an acid to the dispersion.

Thus, according to the present invention there is provided an oil dispersion comprising:
(a) from 1 to 50 % 2-benzoyl-1,3-cyclohexanedione herbicide by weight;
(b) from 0.5 to 20 % water by weight;
(c) from 40 to 90 % oil by weight;
(d) from 0.5 to 20 % one or more emulsifier(s) by weight;
(e) from 0 to 40 % acid by weight; and
(f) from 0 to 40 % other active ingredients by weight;
wherein the sum of the components is 100%.

Suitably, the 2-benzoyl-1,3-cyclohexanedione herbicide is a compound of formula (I) 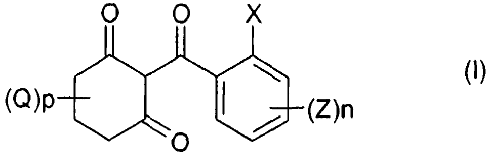
wherein X represents a halogen atom; a straight- or branched-chain alkyl or alkoxy group containing up to six carbon atoms which is optionally substituted by one or more groups -OR¹ or one or more halogen atoms; or a group selected from nitro, cyano, - CO₂R², -S(O)ₘR¹, -O(CH₂)ᵣOR¹, -COR², -NR²R³, -SO₂NR₂R³, -CONR²R³, -CSNR²R³ and -OSO₂R⁴;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁵, OS(O)ₘR⁵, C₁₋₆ alkyl, C₁₋₆alkoxy, C₁₋₆ haloalkyl, C₁₋₆ haloalkoxy, C₁₋₆haloalkoxyC₁₋₆alkyl, carboxy, C₁₋₆ alkylcarbonyloxy, C₁₋₆alkoxycarbonyl, C₁₋₆alkylcarbonyl, amino, C₁₋₆alkylamino, C₁₋₆ dialkylamino having independently the stated number of carbon atoms in each alkyl group, C₁₋₆alkylcarbonylamino, C₁₋₆alkoxycarbonylamino, C₁₋₆ alkylaminocarbonylamino, C₁₋₆dialkylaminocarbonylamino having independently the stated number of carbon atoms in each alkyl group, C₁₋₆ alkoxycarbonyloxy, C₁₋₆ alkylaminocarbonyloxy, C₁₋₆dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁵ represents a straight- or branched-chain alkyl group containing up to six carbon atoms which is optionally substituted by one or more halogen atoms; each Q independently represents C₁₋₄ alkyl or -CO₂R⁶ wherein R⁶ is C₁₋₄ alkyl;
m is zero, one or two;
n is zero or an integer from one to four;
r is one, two or three; and
p is zero or an integer from one to six.

Suitably, X is chloro, bromo, nitro, cyano, C₁₋₄ alkyl, -CF₃, -S(O)ₘR¹, or -OR¹; each Z is independently chloro, bromo, nitro, cyano, C₁₋₄ alkyl, -CF₃, -CH₂OCH₂CF₃, -OR¹,-OS(O)ₘR⁵ or -S(O)ₘR⁵; n is one or two; and p is zero.

Preferably, the 2-benzoyl-1,3-cyclohexanedione herbicide is selected from the group consisting of 2-(2'-nitro-4'-methylsulphonylbenzoyl)-1,3-cyclohexanedione (mesotrione), 2-(2'-nitro-4'-methylsulphonyloxybenzoyl)-1,3-cyclohexanedione, 2-(2'-chloro-4'-methylsulphonylbenzoyl)-1,3-cyclohexanedione (sulcotrione), 2-[2-chloro-4-(methylsuphonyl)-3-[2,2,2-trifluoroethoxy]methyl]benzoyl]-1,3-cyclohexanedione (tembotrione), 4,4-dimethyl-2-(4-methanesulphonyl-2-nitrobenzoyl)-1,3-cyclohexanedione, 2-(2-chloro-3-ethoxy-4- methanesulphonylbenzoyl)-5-methyl-1,3-cyclohexanedione and 2-(2-chloro-3-ethoxy-4-ethanesulphonylbenzoyl)-5-methyl-1,3-cyclohexanedione; most preferably is 2-(2'-nitro-4'-methylsulphonylbenzoyl)-1,3-cyclohexanedione.

The 2-benzoyl-1,3-cyclohexanedione of formula (I) may exist in enolic tautomeric forms that may give rise to geometric isomers. Furthermore, in certain cases, the various substituents may contribute to optical isomerism and/or stereoisomerism. All such tautomeric forms, racemic mixtures and isomers are included within the scope of the present invention.

Mesotrione is described as entry 515 on page 631 in The Pesticide Manual, 13th Edition, Editor C. D. S. Tomlin, British Crop Protection Council, 2003. Mesotrione is produced as a wet paste containing 70 - 90 % mesotrione by weight and 10 - 30 % water by weight. Preferably mesotrione wet paste is used in the preparation of the oil dispersion. Preferably the content of mesotrione in the oil dispersion is between 5 - 20 % by weight.

The water can be introduced into the oil dispersion by adding water as such at a suitable stage of the preparation of the oil dispersion, or by using the active ingredient as a wet paste in the preparation of the oil dispersion. Preferably the water is introduced into the oil dispersion by using the active ingredient as a wet paste. Preferably the content of water in the oil dispersion is from 0.5 to 10 % by weight, more preferably from 1 to 5% by weight

The oil can be, for example, a vegetable oil, a methylated vegetable oil, such as rape seed oil methyl ester, a hydrocarbon oil, or an ester, such as an alkyl or aryl ester of an aliphatic or aromatic carboxylic acid, or triesters of o-phosphoric acid, or mixtures thereof. More than one oil can be present in the oil dispersion; preferably only one oil is used. Preferably the oil is rape seed oil methyl ester. Preferably the content of the oil in the oil dispersion is between 50 - 80 % by weight.

The emulsifier(s) can be non-ionic emulsifier(s) such as alkoxylated castor oil, alkoxylated polyarylphenols, alkoxylated alkylarylphenols, or alkoxylated fatty alcohols, or mixtures thereof; or anionic emulsifier(s) such as calcium-dodecylbenzene sulfonate, di-octyl sulfosuccinate, sulfated or phosphated alkoxylated fatty alcohols, or sulfated or phosphated alkoxylated alkylaryl phenols, or mixtures thereof; or a mixture of non-ionic emulsifier(s) and anionic emulsifier(s). More than one emulsifier can be present in the oil dispersion; preferably two or three emulsifiers are used in combination. Examples of further formulation components that can be present in the oil dispersion are thickeners, antifoams, and solid carriers or fillers.

Examples of thickeners are inorganic materials such as pyrogenic silica known under the trade name Aerosil® or Cab-O-Sil®, precipitated silica, montmorillonite type clays known under the trade name Attaclay® or Attagel®, bentonite, modified bentonites known under the trade name Bentone®. Further examples of thickeners are organic polymers such as polystyrene, polyesters, cellulose derivatives such as ethyl cellulose, alkylated polyvinylpyrrolidones. Examples of antifoams are perfluoro-alkyl phosphonic acid derivatives known under the trade name Fluowet® or silicon based antifoams known under various trade names. Examples of solid carriers or fillers are clays (kaolinite), chalk (calcium carbonate), diatomaceous earth minerals, such as Celite 209®, quartz powder, agglomerates of quartz and kaolinite known under the trade name Sillitin®, talc. Preferably the content of the emulsifier(s) and the optional formulation component(s) in the oil dispersion is between 2 - 30 % by weight.

The acid is an optional component of the oil dispersion and can be an inorganic acid, such as o-phosphoric acid, a carboxylic acid, such as acetic acid, or an acidic surfactant, such as a sulfated or phosphated tristyrylphenol ethoxylate in acidic form, a sulfated or phosphated alkylphenol ethoxylate in acidic form, or a sulfated or phosphated alcohol ethoxylate in acidic form. Where the acid is an inorganic or carboxylic acid the content of the acid in the oil dispersion is preferably between 0.1 - 5 % by weight, more preferably between 0.2 - 2 % by weight. Where the acid is an acidic surfactant the content of the acid in the oil dispersion is preferably between 1 - 40 % by weight. The composition of the present invention may comprise one or more additional active ingredients, for example an herbicide such as 2,3,6-TBA, 2,4-D, 2,4-DB, acetochlor, acifluorfen-sodium, aclonifen, acrolein, alachlor, alloxydim, ametryn, amicarbazone, amidosulfuron, aminopyralid, aminotriazol, amitrole, ammonium sulfamate, anilofos, asulam, atrazine, aviglycine, azafenidin, azimsulfuron, BAY FOE 5043, beflubutamid, benazolin, bencarbazone, benfluralin, benfuresate, bensulfuron-methyl, bensulide, bentazone, benzfendizone, benzobicyclon, benzofenap, bialaphos, bifenox, bispyribac-sodium, borax, bromacil, bromobutide, bromophenoxim, bromoxynil, butachlor, butafenacil, butamifos, butralin, butroxydim, butylate, cafenstrole, carbetamide, carfentrazone-ethyl, chloransulam methyl, chlorbromuron, chlorflurenol-methyl, chloridazon, chlorimuron-ethyl, chloroacetic acid, chlorotoluron, chlorpropham, chlorsulfuron, chlorthal-dimethyl, cinidon-ethyl, cinmethylin, cinosulfuron, clefoxydim profoxidim, clethodim, clodinafop-propargyl, clomazone, clomeprop, clopyralid, cloransulam, cloransulam-methyl, cumuluron, cumyluron, cyanamide, cyanazine, cyclanilide, cycloate, cyclosulfamuron, cycloxydim, cyhalofop, cyhalofop-butyl, cyprosulfamide, daimuron, dalapon, dazomet, desmedipham, ,desmetryn, dicamba, dichlobenil, dichlorprop, dichlorprop-P, diclofop-methyl, diclosulam, difenzoquat metilsulfate, diflufenican, diflufenzopyr, dimefuron, dimepiperate, dimethachlor, dimethametryn, dimethenamid, dimethenamid-P, dimethipin, dimethylarsinic acid, dinitramine, dinoterb, diphenamid, dipropetryn, diquat , ibromide, dithiopyr, diuron, DNOC, DSMA, ,endothal , EPTC, esprocarb, ethalfluralin, ethametsulfuron-methyl, ethephon, ethofumesate, ethoxyfen-ethyl, ethoxysulfuron, etobenzanid, fenclorim, fenoxaprop-P-ethyl, fentrazamide, ferrous sulfate, flamprop, flamprop-M, flazasulfuron, florasulam, fluazifop-butyl, fluazifop-P-butyl, fluazolate, flucarbazone sodium, flucetosulfuron, fluchloralin, flufenacet, flufenpyr- thyl, flumetralin, flumetsulam, flumiclorac-pentyl, flumioxazin, flumipropin, fluometuron, fluoroglycofen-ethyl, fluoxaprop, flupoxam, flupropacil, flupropanate, flupyrsulfuron-methyl-sodium, flurenol, fluridone, flurochloridone, fluroxypyr, ,flurtamone, fluthiacet-methyl, fluxofenim ,fomesafen foramsulfuron, fosamine, glufosinate-ammoniuin, glyphosate, halosulfuron-methyl, haloxyfop, haloxyfop-P, HC-252, hexazinone, imazamethabenz-methyl, ,imazamox, imazapic, imazapyr, imazaquin, imazethapyr, imazosulfuron, ,indanofan, iodosulfuron, iodosulfuron-methyl-sodium, ioxynil, isopropazol, isoproturon, isouron, isoxaben, isoxachlortole, isoxadifen, isoxaflutole, Isoxapyrifop, karbutylate, ,KIH-485 ,lactofen ,lenacil linuron, MCPA, MCPA-thioethyl, MCPB, mecoprop, mecoprop-P, mefenacet, mefenpyr diethyl, mefluidide, mesosulfuron methyl, mesotrione, metam, metamifop (mefluoxafop), metamitron, metazachlor, methabenzthiazuron, methazole, methyl isothiocyanate, methylarsonic acid, methyldymron, ,metobenzuron ,metobromuron ,metolachlor metosulam, metoxuron, metribuzin, metsulfuron-methyl, ,MK-616 ,molinate ,monolinuron, MSMA, naproanilide, ,napropamide ,naptalam , NDA-402989, neburon, nefenacet, nicosulfuron, nipyraclofen, n-methyl-glyphosate, nonanoic acid, norflurazon, oleic acid (fatty acids), orbencarb, orthosulfamuron, oryzalin, oxaciclomefone, oxadiargyl, oxadiazon, oxasulfuron, oxaziclomefone, oxyfluorfen, pebulate, pendimethalin, penoxsulam, pentachlorophenol, pentanochlor, pentoxazone, pethoxamid, petrolium oils, phenmedipham, phenoxaprop-P-ethyl (R), picloram, picolinafen, pinoxaden, piperophos, pretilachlor, primisulfuron, primisulfuron-methyl, procarbazone, prodiamine, profluazol, profoxydim, prohexcadion calcium, prometon, prometryn, propachlor, propanil, propaquizafop, propazine, propham, propisochlor, propoxycarbazone, propoxycarbazone-sodium, propyzamide, prosulfocarb, prosulfuron, pyraclonil pyrazogyl, pyraflufen-ethyl, pyrasulfotole, pyazolynate, pyrazosulfuron-ethyl, pyrazoxyfen, pyribenzoxim, pyributicarb, pyridafol, pyridate, pyriftalid, pyriminobacmethyl, pyrimisulfan, pyrithiobac-sodium, quinclorac, quinmerac, quinoclamine, quizalofop, quizalofop-P, rimsulfuron, sequestren, sethoxydim, siduron, simazine, simetryn, S-metolachlor, sodium chlorate, sutcotrione, sulfentrazone, sulfometuron-methyl, sulfosate, sulfosulfuron, sulfuric acid, tar oils, TCA-sodium, tebutam, Tebuthiuron, tefuryltrione, Tembotrione, tepraloxydim, Terbacil, terbumeton, Terbuthylazine, terbutryn, Thenylchlor, thiazafluron, Thiazimin, thiazopyr, Thiencarbazone, thifensulfuron-methyl (thiameturon-methyl), Thiobencarb, tiocarbazil, Topramezone, tralkoxydim, tri-allate, triasulfuron, triaziflam, tribenuron-methyl, triclopyr, trietazine, triflosulam, trifloxysulfuron, trifloxysulfuron-sodium, trifluralin, triflusulfuron-methyl, trinexapac-ethyl, tritosulfuron.

Especially preferred are wherein the additional active ingredient is a triazine herbicide, such as atrazine, cyanazine, terbuthylazine and simazine, or a sulfonyl urea herbicide, such as triasulfuron, metsulfuron, rimsulfuron, thifensulfuron and nicosulfuron, or a chloro acetamide herbicide, such as acetochlor, alachlor and S-metolachlor. The content of such optional active ingredients in the oil dispersion is 0.2-40 %, preferably 0.5 - 20 %.

Oil dispersions in which the solid active ingredients are finely dispersed in the oil are preferred. Fine dispersions are conveniently obtained by grinding together the active ingredient(s) and the oil, with one or more further formulation component(s). Preferably, the active ingredient is milled until the average particle size diameter is one micron or less. This can conveniently be achieved by using a bead mill. In the present invention water is conveniently introduced by grinding a mixture of mesotrione as a wet paste, other formulation ingredients and oil. Additional water may be added as such before or after grinding.

The oil dispersion is diluted with water before use to produce an aqueous composition which is used in controlling plants or plant growth. Dilution in water results in a suspoemulsion of the 2-benzoyl-1,3-cyclohexanedione herbicide.

A method of controlling plants which comprises applying to the plants or to the locus thereof a herbicidally effective amount of a suspoemulsion obtained by dilution of an oil dispersion according to the present invention is also disclosed herein.

A method of inhibiting plant growth which comprises applying to the plants or to the locus thereof a herbicidally effective amount of a suspoemulsion obtained by dilution of an oil dispersion according to the present invention is also disclosed herein.

A method of selectively controlling grasses and weeds in crops of useful plants which comprises applying to the useful plants or locus thereof or to the area of cultivation a herbicidally effective amount of a suspoemulsion obtained by dilution of an oil dispersion according to the present invention is also disclosed herein.

The term "herbicide" as used herein means a compound that controls or modifies the growth of plants. The term "herbicidally effective amount" means the quantity of such a compound or combination of such compounds that is capable of producing a controlling or modifying effect on the growth of plants. Controlling or modifying effects include all deviation from natural development, for example: killing, retardation, leaf bum, albinism, dwarfing and the like. The term "plants" refers to all physical parts of a plant, including seeds, seedlings, saplings, roots, tubers, stems, stalks, foliage, and fruits. The term "locus" is intended to include soil, seeds, and seedlings, as well as established vegetation.

The rates of application of the active ingredient(s) may vary within wide limits and depend on the nature of the soil, the method of application (pre- or post-emergence; seed dressing; application to the seed furrow; no tillage application etc.), the crop plant, the grass or weed to be controlled, the prevailing climatic conditions, and other factors governed by the method of application, the time of application and the target crop. Mesotrione is generally applied at a rate of from 10 to 2000 g/ha, preferably from 50 to 500 g/ha, even more preferably from 70 to 250 g/ha. The application rate of optional other active ingredient(s) is determined by their biological efficacy. For example triazine herbicides, such as atrazine, terbuthylazine and simazine, are applied at a rate of from 300 to 3000 g/ha, whereas sulfonyl urea herbicides, such as triasulfuron, metsulfuron, rimsulfuron, thifensulfuron and nicosulfuron, are applied at a rate of from 5 to 150 g/ha, and chloro acetamide herbicides, such as acetochlor, alachlor and S-metolachlor, are applied at a rate of from 500 to 3000 g/ha.

Crops of useful plants in which the composition according to the invention can be used include perennial crops, such as citrus fruit, grapevines, nuts, oil palms, olives, pome fruit, stone fruit and rubber, and annual arable crops, such as cereals, for example barley and wheat, cotton, oilseed rape, maize, rice, soy beans, sugar beet, sugar cane, sunflowers, ornamentals and vegetables, especially maize.

The grasses and weeds to be controlled may be both monocotyledonous species, for example Agrostis, Alopecurus, Avena, Bromus, Cyperus, Digitaria, Echinochloa, Lolium, Monochoria, Rottboellia, Sagittaria, Scirpus, Setaria, Sida and Sorghum, and dicotyledonous species, for example Abutilon, Amaranthus, Chenopodium, Chrysanthemum, Galium, Ipomoea, Nasturtium, Sinapis, Solanum, Stellaria, Veronica, Viola and Xanthium.

Crops are to be understood as also including those crops which have been rendered tolerant to herbicides or classes of herbicides (e.g. ALS-, GS-, EPSPS-, PPO- and HPPD-inhibitors) by conventional methods of breeding or by genetic engineering. An example of a crop that has been rendered tolerant to imidazolinones, e.g. imazamox, by conventional methods of breeding is Clearfield® summer rape (canola). Examples of crops that have been rendered tolerant to herbicides by genetic engineering methods include e.g. glyphosate- and glufosinate-resistant maize varieties commercially available under the trade names RoundupReady® and LibertyLink®.

Crops are also to be understood as being those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK® (Syngenta Seeds). The Bt toxin is a protein that is formed naturally by *Bacillus thuringiensis* soil bacteria. Examples of toxins, or transgenic plants able to synthesise such toxins, are described in EP-A-451 878, EP-A-374 753, WO 93/07278, WO 95/34656, WO 03/052073 and EP-A-427 529.

Examples of transgenic plants comprising one or more genes that code for an insecticidal resistance and express one or more toxins are KnockOut® (maize), Yield Gard® (maize), NuCOTIN33B® (cotton), Bollard® (cotton), NewLeaf® (potatoes), NatureGard® and Protexcta®. Plant crops or seed material thereof can be both resistant to herbicides and, at the same time, resistant to insect feeding ("stacked" transgenic events). For example, seed can have the ability to express an insecticidal Cry3 protein while at the same time being tolerant to glyphosate.

Crops are also to be understood as being those which are obtained by conventional methods of breeding or genetic engineering and contain so-called output traits (e.g. improved storage stability, higher nutritional value and improved flavour).

Areas under cultivation include land on which the crop plants are already growing and land intended for cultivation with those crop plants.

If necessary or desired for a particular application or crop, the composition of the present invention may contain an antidotally effective amount of a safener. Safeners are known in the art and many are commercially available.

The present invention is demonstrated but not limited by the following examples.

### Preparation of samples F1 to F7

Mesotrione as a wet paste was dispersed in rape seed oil methyl ester (Agnique ME 18 RD). The three emulsifiers, Servirox OEG 45 (castor oil ethoxylated with 18 moles of ethylene oxide, neutral), Soprophor TS/10 (tristyrylphenol ethoxylated with 10 moles of ethylene oxide, neutral) and Ca-DBS (calcium-dodecylbenzene sulfonate 70% by weight in butanol, neutral), where appropriate the acid (F1: Soprophor 3D33 - ethoxylated and phosphated tristyrylphenol, acidic; F2: Soprophor 4D384 - ethoxylated and sulfated tristyrylphenol, ammonium salt, acidic; F3: Rhodafac RS 610E - ethoxylated and phosphated isotridecyl alcohol, acidic; F4: o-phosphoric acid) and where appropriate water (F4, F5, F6) were added to the oil dispersion and the mixture was ground together for 10 minutes in an Eiger Torrance Mini Motormill bead mill. A fine dispersion of mesotrione in the oil was obtained.

### Preparation of control F8

Dry mesotrione was dispersed in rape seed oil methyl ester (Agnique ME 18 RD). The three emulsifiers (Servirox OEG 45, Soprophor TS/10 and Ca-DBS, as above) were added to the oil dispersion and the mixture was ground together for 10 minutes in an Eiger Torrance Mini Motormill bead mill. A fine dispersion of mesotrione in the oil was obtained.

The amounts of the components present in samples F1 to F7 and in control F8 are given below; the values are referred in % by weight.

| | F1 | F2 | F3 | F4 |
|---|---|---|---|---|
| Mesotrione | 10.3 | 10.3 | 10.3 | 10.3 |
| water (from wet paste) | 1.7 | 1.7 | 1.7 | 1.7 |
| water (added as such) | - | - | - | 1.5 |
| water total | 1.7 | 1.7 | 1.7 | 3.2 |
| Agnique ME 18 RD | 77.0 | 77.0 | 77.0 | 78.0 |
| Servirox OEG 45 | 3.0 | 3.0 | 3.0 | 3.0 |
| Soprophor TS/10 | 2.0 | 2.0 | 2.0 | 2.0 |
| Ca-DBS | 3.0 | 3.0 | 3.0 | 3.0 |
| Soprophor 3D33 | 3.0 | - | - | - |
| Soprophor 4D384 | - | 3.0 | - | - |
| Rhodafac RS 610E | - | - | 3.0 | - |
| o-phosphoric acid | - | - | - | 0.5 |
| Sum | 100.0 | 100.0 | 100.0 | 100.0 |

| | F5 | F6 | F7 | F8 |
|---|---|---|---|---|
| Mesotrione | 10.3 | 10.3 | 10.3 | 10.3 |
| water (from wet paste) | 1.7 | 1.7 | 1.7 | - |
| water (added as such) | 4.0 | 2.0 | - | - |
| water total | 5.7 | 3.7 | 1.7 | - |
| Agnique ME 18 RD | 76.0 | 78.0 | 80.0 | 81.7 |
| Servirox OEG 45 | 3.0 | 3.0 | 3.0 | 3.0 |
| Soprophor TS/10 | 2.0 | 2.0 | 2.0 | 2.0 |
| Ca-DBS | 3.0 | 3.0 | 2.0 | 3.0 |
| Sum | 100.0 | 100.0 | 100.0 | 100.0 |

The stability data shows the following amount of decomposition of mesotrione after the oil dispersions were stored at 50°C for three months:

| Oil dispersions | Decomposition of mesotrione |
|---|---|
| F1 (1.7 % water + 3.0% Soprophor 3D33) | 1.7% |
| F2 (1.7 % water + 3.0% Soprophor 4D384) | 2.0 % |
| F3 (1.7 % water + 3.0% Rhodafac RS 610 E) | 2.1 % |
| F4 (1.7 % water + 0.5% o-phosphoric acid) | 1.0 % |
| F5 (5.7 % water) | 1.0 % |
| F6 (3.7 % water) | 5.6 % |
| F7 (1.7 % water) | 7.6 % |
| F8 (0.0 % water) | 17.9% |

The trials F1 to F7 consistently showed a beneficial effect of water and acids on the stability of mesotrione when compared to the control which contained no water (F8).

### Preparation of samples F9 to F12

The amounts of the components present in samples F9 to F12 are given below; the values are referred in % by weight.

| | F9 | F10 | F11 | F12 |
|---|---|---|---|---|
| Tembotrione | 10.0 | 10.0 | 10.0 | 10.0 |
| water (from batch) | - | - | - | - |
| water (added as such) | - | - | 4.0 | 4.0 |
| water total | - | - | 4.0 | 4.0 |
| Agnique ME 18 RD | 82.0 | 79.0 | 78.0 | 75.0 |
| Servirox OEG 45 | 3.0 | 3.0 | 3.0 | 3.0 |
| Soprophor TS/10 | 2.0 | 2.0 | 2.0 | 2.0 |
| Ca-DBS | 3.0 | 3.0 | 3.0 | 3.0 |
| Soprophor 3D33 | - | 3.0 | - | 3.0 |
| Sum | 100.0 | 100.0 | 100.0 | 100.0 |

Tembotrione was dispersed in rape seed oil methyl ester (Agnique ME 18 RD). The three emulsifiers, Servirox OEG 45 (castor oil ethoxylated with 18 moles of ethylene oxide, neutral), Soprophor TS/10 (tristyrylphenol ethoxylated with 10 moles of ethylene oxide, neutral) and Ca-DBS (calcium-dodecylbenzene sulfonate 70% by weight in butanol, neutral), where appropriate the acid Soprophor 3D33 - ethoxylated and phosphated tristyrylphenol, acidic - (F10, F22) where appropriate water (F11, F12) were added to the oil dispersion and the mixture was ground together for 10 minutes in an Eiger Torrance Mini Motormill bead mill. A fine dispersion of tembotrione in the oil was obtained.

The stability data shows the following amount of decomposition of tembotrione after the oil dispersions were stored at 50°C for three months:

| Oil dispersions | Decomposition of tembotrione |
|---|---|
| F9 (0 % water) | 9.3 % |
| F10 (0 % water + 3.0 % Soprophor 3D33) | 3.8 % |
| F11 (4 % water) | 3.9 % |
| F12 (4 % water + 3.0 % Soprophor 3D33) | 1.9% |

The trials F10 to F12 consistently showed a beneficial effect of water and acids on the stability of tembotrione when compared to the control which contained no water (F9).

## Claims

1. An oil dispersion comprising:
(a) from 1 to 50 % 2-benzoyl-1,3-cyclohexanedione herbicide by weight;
(b) from 0.5 to 20 % water by weight;
(c) from 40 to 90 % oil by weight;
(d) from 0.5 to 20 % one or more emulsifier(s) by weight;
(e) from 0 to 40 % acid by weight; and
(f) from 0 to 40 % other active ingredients by weight;
wherein the sum of the components is 100%.

2. An oil dispersion according to claim 1, wherein the 2-benzoyl-1,3-cyclohexanedione herbicide is a compound of formula (I) 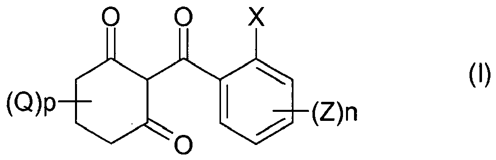
wherein X represents a halogen atom; a straight- or branched-chain alkyl or alkoxy group containing up to six carbon atoms which is optionally substituted by one or more groups -OR¹ or one or more halogen atoms; or a group selected from nitro, cyano, -CO₂R², -S(O)ₘR¹,-O(CH₂)ᵣOR¹, -COR², -NR²R³, -SO₂NR₂R³, -CONR²R³, -CSNR²R³ and -OSO₂R⁴; suitably X is chloro, bromo, nitro, cyano, C₁₋₄ alkyl, -CF₃, -S(O)ₘR¹, or -OR¹;;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁵, OS(O)ₘR⁵, C₁₋₆ alkyl, C₁₋₆ alkoxy, C₁₋₆ haloalkyl, C₁₋₆ haloalkoxy, C₁₋₆haloalkoxyC₁₋₆alkyl, carboxy, C₁₋₆ alkylcarbonyloxy, C₁₋₆ alkoxycarbonyl, C₁₋₆ alkylcarbonyl, amino, C₁₋₆ alkylamino, C₁₋₆ dialkylamino having independently the stated number of carbon atoms in each alkyl group, C₁₋₆ alkylcarbonylamino, C₁₋₆ alkoxycarbonylamino, C₁₋₆ alkylaminocarbonylamino, C₁₋₆ dialkylaminocarbonylamino having independently the stated number of carbon atoms in each alkyl group, C₁₋₆ alkoxycarbonyloxy, C₁₋₆ alkylaminocarbonyloxy, C₁₋₆ dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy; suitably each Z is independently chloro, bromo, nitro, cyano, C₁₋₄ alkyl, -CF₃, CH₂OCH₂CF₃, -OR¹, -OS(O)ₘR⁵ or -S(O)ₘR⁵; R⁵ represents a straight- or branched-chain alkyl group containing up to six carbon atoms which is optionally substituted by one or more halogen atoms; each Q independently represents C₁₋₄ alkyl or -CO₂R⁶ wherein R⁶ is C₁₋₄ alkyl;
m is zero, one or two;
n is zero or an integer from one to four; suitably n is one or two;
r is one, two or three; and
p is zero or an integer from one to six; suitably p is zero.

3. An oil dispersion according to claim 2, wherein the 2-benzoyl-1,3-cyclohexanedione herbicide is mesotrione or tembotrione.

4. An oil dispersion according to claim 3, wherein the 2-benzoyl-1,3-cyclohexanedione herbicide is mesotrione.

5. An oil dispersion according to any one of the previous claims, in which 2-benzoyl-1,3-cyclohexanedione wet paste is used in the preparation of the oil dispersion.

6. An oil dispersion according to any one of the previous claims, in which the content of mesotrione is from 5 to 20 % by weight.

7. An oil dispersion according to any one of the previous claims, in which the content of water is from 1 to 10 % by weight.

8. An oil dispersion according to any one of the previous claims, in which the oil is rape seed oil methyl ester.

9. An oil dispersion according to any one of the previous claims, in which the content of the oil is from 50 to 80 % by weight.

10. An oil dispersion according to any one of the previous claims, in which the acid is an inorganic acid.

11. An oil dispersion according to any one of the previous claims, in which the inorganic acid is phosphoric acid.

12. An oil dispersion according to any one of the previous claims, in which the acid is a carboxylic acid.

13. An oil dispersion according to any one of the previous claims, in which the content of the inorganic acid or the carboxylic acid is from 0.2 to 2 % by weight.

14. An oil dispersion according to any one of the previous claims, in which the acid is an acidic surfactant.

15. An oil dispersion according to claim 14 in which the acidic surfactant is selected from a group comprising a sulfated or phosphated tristyrylphenol ethoxylate in acidic form, a sulfated or phosphated alkylphenol ethoxylate in acidic form, or a sulfated or phosphated alcohol ethoxylate in acidic form.

16. An oil dispersion according to claim 14 or claim 15, in which the content of the acidic surfactant is from 1 to 40 % by weight.

17. An oil dispersion according to claim 1, wherein the 2-benzoyl-1,3-cyclohexanedione herbicide has an average diameter of one micron or less.

## Patentansprüche

1. Öldispersion, umfassend:
(a) von 1 bis 50 Gew.-% 2-Benzoyl-1,3-cyclohexandionherbizid;
(b) von 0,5 bis 20 Gew.-% Wasser;
(c) von 40 bis 90 Gew.-% Öl;
(d) von 0,5 bis 20 Gew.-% von einem oder mehreren Emulgatoren;
(e) von 0 bis 40 Gew.-% Säure; und
(f) von 0 bis 40 Gew.-% andere Wirkstoffe, wobei die Summe der Bestandteile 100 % beträgt.

2. Öldispersion nach Anspruch 1, wobei das 2-Benzoyl-1,3-Cyclohexandion-Herbizid eine Verbindung der Formel (I) ist 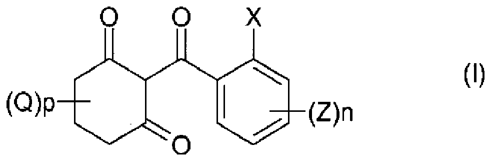
worin X für ein Halogenatom; eine gerad- oder verzweigtkettige Alkyl- oder Alkoxygruppe, die bis zu sechs Kohlenstoffatome enthält und wahlweise durch eine oder mehrere -OR¹-Gruppen oder ein oder mehrere Halogenatome substituiert ist; oder für eine Gruppe steht, die ausgewählt ist aus Nitro, Cyano, -CO₂R², -S(O)ₘR¹, O(CH₂)ᵣOR¹, -COR², -NR²R³, -SO₂NR₂R³, -CONR²R³, -CSNR²R³ und -OSO₂R⁴;
worin X geeigneterweise Chlor, Brom, Nitro, Cyano, C₁₋₄-Alkyl, -CF₃, -S(O)ₘR¹ oder -OR¹ ist;
R¹ eine gerad- oder verzweigtkettige Alkylgruppe repräsentiert, die bis zu sechs Kohlenstoffatome enthält und wahlweise durch ein oder mehrere Halogenatome substituiert ist;
R² und R³ jeweils unabhängig ein Wasserstoffatom repräsentieren; oder eine gerad- oder verzweigtkettige Alkylgruppe, die bis zu sechs Kohlenstoffatome enthält und die wahlweise durch ein oder mehrere Halogenatome substituiert sind;
R⁴ eine gerad- oder verzweigtkettige Alkyl-, Alkenyl- oder Alkynylgruppe repräsentiert, die bis zu sechs Kohlenstoffatome enthält und die wahlweise durch ein oder mehrere Halogenatome substituiert ist; oder eine Cycloalkylgruppe, die von drei bis sechs Kohlenstoffatome enthält;
jedes Z unabhängig Halo, Nitro, Cyano, S(O)ₘR⁵, OS(O)ₘR⁵, C₁₋₆-Alkyl, C₁₋₆-Alkoxy, C₁₋₆-Haloalkyl, C₁₋₆-Haloalkoxy, C₁₋₆-Haloalkoxy-C₁₋₆-Alkyl, Carboxy, C₁₋₆-Alkylcarbonyloxy, C₁₋₆-Alkoxycarbonyl, C₁₋₆-Alkylcarbonyl, Amino, C₁₋₆-Alkylamino, C₁₋₆-Dialkylamino, die unabhängig voneinander die angegebene Zahl Kohlenstoffatome in jeder Alkylgruppe aufweisen, C₁₋₆-Alkylcarbonylamino,C₁₋₆-Alkoxycarbonylamino, C₁₋₆-Alkylaminocarbonylamino, C₁₋₆-Dialkylaminocarbonylamino, die unabhängig voneinander die angegebene Zahl Kohlenstoffatome in jeder Alkylgruppe aufweisen, C₁₋₆-Alkoxycarbonyloxy, C₁₋₆-Alkylaminocarbonyloxy, C₁₋₆-Dialkylcarbonyloxy, Phenylcarbonyl, substituiertes Phenylcarbonyl, Phenylcarbonyloxy, substituiertes Phenylcarbonyloxy, Phenylcarbonylamino, substituiertes Phenylcarbonylamino, Phenoxy oder substituiertes Phenoxy repräsentiert; wobei geeigneterweise jedes Z unabhängig davon Chlor, Brom, Nitro, Cyano, C₁₋₄-Alkyl, -CF₃, -CH₂OCH₂CF₃, -OR¹, -OS(O)ₘR⁵ oder -S(O)ₘR⁵ ist;
R⁵ eine gerad- oder verzweigtkettige Alkylgruppe repräsentiert, die bis zu sechs Kohlenstoffatome enthält und die wahlweise durch ein oder mehrere Halogenatome substituiert ist; worin jedes Q unabhängig C₁₋₄-Alkyl oder -CO₂R⁶ repräsentiert, worin R⁶ C₁₋₄-Alkyl ist;
m null, eins oder zwei ist;
n null oder eine ganze Zahl zwischen eins und vier ist; geeigneterweise n eins oder zwei ist;
r eins, zwei oder drei ist; und
p null oder eine ganze Zahl von eins bis sechs ist;
p geeigneterweise null ist.

3. Öldispersion nach Anspruch 2, wobei das 2-Benzoyl-1,3-Cyclohexandion-Herbizid Mesotrion oder Tembotrion ist.

4. Öldispersion nach Anspruch 3, wobei das 2-Benzoyl-1,3-Cyclohexandion-Herbizid Mesotrion ist.

5. Öldispersion nach einem der vorherigen Ansprüche, wobei 2-Benzoyl-1,3-Cyclohexandion-Nasspaste bei der Zubereitung der Öldispersion verwendet wird.

6. Öldispersion nach einem der vorherigen Ansprüche, wobei der Mesotriongehalt von 5 bis 20 Gew.-% beträgt.

7. Öldispersion nach einem der vorherigen Ansprüche, wobei der Wassergehalt von 1 bis 10 Gew.-% beträgt.

8. Öldispersion nach einem der vorherigen Ansprüche, wobei das Öl Rapssamenöl-Methylester ist.

9. Öldispersion nach einem der vorherigen Ansprüche, wobei der Ölgehalt von 50 bis 80 Gew.-% beträgt.

10. Öldispersion nach einem der vorherigen Ansprüche, wobei die Säure eine anorganische Säure ist.

11. Öldispersion nach einem der vorherigen Ansprüche, wobei die anorganische Säure Phosphorsäure ist.

12. Öldispersion nach einem der vorherigen Ansprüche, wobei die Säure eine Carbonsäure ist.

13. Öldispersion nach einem der vorherigen Ansprüche, wobei der Gehalt der anorganischen Säure oder der Carbonsäure von 0,2 bis 2 Gew.-% beträgt.

14. Öldispersion nach einem der vorherigen Ansprüche, wobei die Säure ein saures Tensid ist.

15. Öldispersion nach Anspruch 14, wobei das saure Tensid ausgewählt ist aus der Gruppe, umfassend ein sulfatiertes oder phosphatiertes Tristyrylphenol-Ethoxylat in Säureform, ein sulfatiertes oder phosphatiertes Alkylphenol-Ethoxylat in Säureform oder ein sulfatiertes oder phosphatiertes Alkoholethoxylat in Säureform.

16. Öldispersion nach einem der Ansprüche 14 oder 15, wobei der Gehalt des sauren Tensids von 1 bis 40 Gew.-% beträgt.

17. Öldispersion nach Anspruch 1, wobei das 2-Benzoyl-1,3-Cyclohexandion-Herbizid einen durchschnittlichen Durchmesser von einem Mikrometer oder weniger aufweist.

## Revendications

1. Dispersion huileuse, comprenant :
(a) de 1 à 50 % en poids d'herbicide à base de 2-benzoyl-1,3-cyclohexanedione ;
(b) de 0,5 à 20 % en poids d'eau ;
(c) de 40 à 90 % en poids d'huile ;
(d) de 0,5 à 20 % en poids d'un ou plusieurs émulsifiants ;
(e) de 0 à 40 % en poids d'acide ; et
(f) de 0 à 40 % en poids d'autres ingrédients actifs ; dans laquelle la somme des composants est de 100 %.

2. Dispersion huileuse selon la revendication 1, dans laquelle l'herbicide à base de 2-benzoyl-1,3-cyclohexanedione est un composé de formule (I) 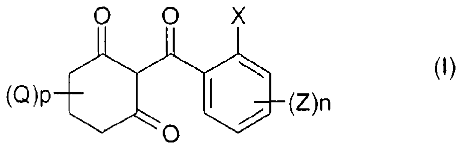
dans laquelle X représente un atome d'halogène ; un groupement alkyle ou alcoxy à chaîne linéaire ou ramifiée contenant jusqu'à six atomes de carbone, qui est éventuellement substitué par un ou plusieurs groupements -OR¹ ou un ou plusieurs atomes d'halogène ; ou un groupement choisi parmi nitro, cyano, -CO₂R²,-S(O)ₘR¹, -O(CH₂)ᵣOR¹, -COR², -NR²R³, -SO₂NR²R³, -CONR²R³,-CSNR²R³ et -OSO₂R⁴ ; de manière convenable, X est chloro, bromo, nitro, cyano, C₁₋₄ alkyle, -CF₃, -S(O)ₘR¹ ou -OR¹ ; R¹ représente un groupement alkyle à chaîne linéaire ou ramifiée contenant jusqu'à six atomes de carbone, qui est éventuellement substitué par un ou plusieurs atomes d'halogène ;
R² et R³ représentent chacun indépendamment un atome d'hydrogène, ou un groupement alkyle à chaîne linéaire ou ramifiée contenant jusqu'à six atomes de carbone, qui est éventuellement substitué par un ou plusieurs atomes d'halogène ;
R⁴ représente un groupement alkyle, alcényle ou alcynyle à chaîne linéaire ou ramifiée contenant jusqu'à six atomes de carbone, éventuellement substitué par un ou plusieurs atomes d'halogène ; ou un groupement cycloalkyle contenant de trois à six atomes de carbone ;
chaque Z représente indépendamment halogéno, nitro, cyano, S(O)ₘR⁵, OS(O)ₘR⁵, C₁₋₆ alkyle, C₁₋₆ alcoxy, C₁₋₆ halogénoalkyle, C₁₋₆ halogénoalcoxy, C₁₋₆ halogénoalcoxyC₁₋₆ alkyle, carboxy, C₁₋₆ alkylcarbonyloxy, C₁₋₆ alcoxycarbonyle, C₁₋₆ alkylcarbonyle, amino, C₁₋₆ alkylamino, C₁₋₆ dialkylamino ayant indépendamment le nombre énoncé d'atomes de carbone dans chaque groupement alkyle, C₁₋₆ alkylcarbonylamino, C₁₋₆ alcoxycarbonylamino, C₁₋₆ alkylaminocarbonylamino, C₁₋₆ dialkylaminocarbonylamino ayant indépendamment le nombre énoncé d'atomes de carbone dans chaque groupement alkyle, C₁₋₆ alcoxycarbonyloxy, C₁₋₆ alkylaminocarbonyloxy, C₁₋₆ dialkylcarbonyloxy, phénylcarbonyle, phénylcarbonyle substitué, phénylcarbonyloxy, phénylcarbonyloxy substitué, phénylcarbonylamino, phénylcarbonylamino substitué, phénoxy ou phénoxy substitué ; de manière convenable, chaque Z est indépendamment chloro, bromo, nitro, cyano, C₁₋₄ alkyle, -CF₃, -CH₂OCH₂CF₃,-OR¹, -OS(O)ₘR⁵ ou -S(O)ₘR⁵;
R⁵ représente un groupement alkyle à chaîne linéaire ou ramifiée contenant jusqu'à six atomes de carbone, qui est éventuellement substitué par un ou plusieurs atomes d'halogène ; chaque Q représente indépendamment C₁₋₄ alkyle ou -CO₂R⁶, où R⁶ est C₁₋₄ alkyle ;
m vaut zéro, un ou deux ;
n vaut zéro ou est un nombre entier allant de un à quatre ; de manière convenable, n vaut un ou deux ;
r vaut un, deux ou trois ; et
p vaut zéro ou est un nombre entier allant de un à six ; de manière convenable, p vaut zéro.

3. Dispersion huileuse selon la revendication 2, dans laquelle l'herbicide à base de 2-benzoyl-1,3-cyclohexanedione est la mésotrione ou la tembotrione.

4. Dispersion huileuse selon la revendication 3, dans laquelle l'herbicide à base de 2-benzoyl-1,3-cyclohexanedione est la mésotrione.

5. Dispersion huileuse selon l'une quelconque des revendications précédentes, dans laquelle de la pâte humide de 2-benzoyl-1,3-cyclohexanedione est utilisée dans la préparation de la dispersion huileuse.

6. Dispersion huileuse selon l'une quelconque des revendications précédentes, dans laquelle la teneur en mésotrione va de 5 à 20 % en poids.

7. Dispersion huileuse selon l'une quelconque des revendications précédentes, dans laquelle la teneur en eau va de 1 à 10 % en poids.

8. Dispersion huileuse selon l'une quelconque des revendications précédentes, dans laquelle l'huile est un méthylester d'huile de colza.

9. Dispersion huileuse selon l'une quelconque des revendications précédentes, dans laquelle la teneur en huile va de 50 à 80 % en poids.

10. Dispersion huileuse selon l'une quelconque des revendications précédentes, dans laquelle l'acide est un acide inorganique.

11. Dispersion huileuse selon l'une quelconque des revendications précédentes, dans laquelle l'acide inorganique est de l'acide phosphorique.

12. Dispersion huileuse selon l'une quelconque des revendications précédentes, dans laquelle l'acide est un acide carboxylique.

13. Dispersion huileuse selon l'une quelconque des revendications précédentes, dans laquelle la teneur en acide inorganique ou en acide carboxylique va de 0,2 à 2 % en poids.

14. Dispersion huileuse selon l'une quelconque des revendications précédentes, dans laquelle l'acide est un agent tensioactif acide.

15. Dispersion huileuse selon la revendication 14, dans laquelle l'agent tensioactif acide est choisi dans le groupe constitué par un éthoxylate de tristyrylphénol sulfaté ou phosphaté sous forme acide, un éthoxylate d'alkylphénol sulfaté ou phosphaté sous forme acide, ou un éthoxylate d'alcool sulfaté ou phosphaté sous forme acide.

16. Dispersion huileuse selon la revendication 14 ou la revendication 15, dans laquelle la teneur en agent tensioactif acide va de 1 à 40 % en poids.

17. Dispersion huileuse selon la revendication 1, dans laquelle l'herbicide à base de 2-benzoyl-1,3-cyclohexanedione possède un diamètre moyen d'un micron ou moins.
